Europäisches Patentamt

European Patent Office

Office européen des brevets

(19)

(11) Numéro de publication: **0 252 494**
**A1**

# (12) DEMANDE DE BREVET EUROPEEN

(21) Numéro de dépôt: **87109801.8**

(22) Date de dépôt: **07.07.87**

(51) Int. Cl.4: **H01M 6/14** , H01M 10/36

(30) Priorité: **10.07.86 FR 8610096**

(43) Date de publication de la demande:
**13.01.88 Bulletin 88/02**

(84) Etats contractants désignés:
**DE FR GB IT SE**

(71) Demandeur: **Société Anonyme dite SAFT**
**156, avenue de Metz**
**F-93230 Romainville(FR)**

(72) Inventeur: **Gabano, Jean-Paul**
**11 rue des Dames des Roches**
**F-86000 Poitiers(FR)**
Inventeur: **Sarradin, Joel**
**c/o CENTRE NATIONAL DE LA RECHERGE**
**SCIENTIFIQUE**
**2 à 8 rue Henri Dunant F-94320 Thiais(FR)**
Inventeur: **Messina, Richard**
**19 rue des Jardins le Menhir**
**F-91800 Boussy Saint Antoine(FR)**
Inventeur: **Perichon, Jacques**
**9 avenue Saint Jacques**
**F-91600 Savigny Sur Orge(FR)**

(74) Mandataire: **Weinmiller, Jürgen et al**
**Lennéstrasse 9 Postfach 24**
**D-8133 Feldafing(DE)**

(54) Electrolyte non aqueux à base de dioxyde de soufre pour générateurs éléctrochimiques.

(57) Electrolyte non aqueux à base de dioxyde de soufre pour générateurs électrochimiques, caractérisé par le fait qu'il contient de la diméthylsulfone dans une proportion de 1 à 6 moles par litre, additionnée d'un sel alcalin.

EP 0 252 494 A1

FIG. 3

# Electrolyte non aqueux à base de dioxyde de soufre pour générateurs électrochimiques

La présente invention concerne un électrolyte non aqueux à base de dioxyde de soufre pour générateurs électrochimiques rechargeables ou non, à anode de lithium.

On cherche à réaliser des générateurs électrochimiques à haute densité d'énergie et de puissance, fonctionnant dans une large gamme de température depuis -40°C à +70°C.

Dans ce but le dioxyde de soufre, bien que constituant un mauvais solvant d'électrolyte, a déjà fait l'objet de nombreuses applications dans les générateurs électrochimiques non aqueux à anode de lithium pour assurer à la fois la fonction de matière active positive et partiellement celle de solvant d'électrolyte. Dans de tels générateurs, le dioxyde de soufre a rarement été utilisé comme unique solvant d'électrolyte en raison même de son très faible pouvoir ionogène vis-à-vis des solutés usuels ; il a donc été nécessaire de rajouter des cosolvants organiques comme l'acétonitrile pour aider à la solvatation de l'électrolyte et à l'obtention de solutions à conductivité électrolytique élevée.

L'utilisation de l'acétonitrile présente cependant certains inconvénients, notamment au niveau des problèmes de sécurité lorsque les générateurs sont utilisés de façon abusive ; par ailleurs les solutions d'électrolytes qui contiennent en général du bromure de lithium comme soluté sont réputées peu stables chimiquement et sont susceptibles d'évoluer par oxydation des ions bromure par le dioxyde de soufre, cette réaction étant plus ou moins accélérée par la nature du cosolvant organique.

Ce dernier phénomène explique en particulier la dégradation des performances observées avec les générateurs Li/SO$_2$ lorsque ceux ci sont stockés à température élevée pendant des durées de plusieurs mois.

Pour remédier à ces limitations on a récemment proposé certains solutés, tels que clovoborates Li$_2$B$_{10}$Cl$_{10}$ qui se dissolvent facilement dans SO$_2$ en l'absence de solvants organiques en donnant des conductivités ioniques acceptables ; toutefois ils sont extrêmement coûteux et de ce fait ne peuvent être utilisés dans la pratique.

Un but de la présente invention est de proposer un électrolyte à base de SO$_2$ ne comportant pas les inconvénients précités, c'est-à-dire un électrolyte qui présente une conductivité ionique élevée dans un large intervalle de températures, qui possède une grande stabilité chimique dans les conditions d'utilisation et d'environnement des générateurs à électrolytes non aqueux, tout en étant par ailleurs économiquement viable par rapport à ses éléments constitutifs.

La présente invention a pour objet un électrolyte non aqueux à base de dioxyde de soufre pour générateurs électrochimiques, caractérisé par le fait qu'il contient de la diméthylsulfone dans une proportion de 1 à 6 moles par litre, additionnée d'au moins un sel alcalin.

La diméthylsulfone (CH$_3$)$_2$SO$_2$ constitue un soluté à pouvoir ionogène élevé dans le dioxyde de soufre liquide.

De façon surprenante on a constaté la grande solubilité de la diméthylsulfone dans l'anhydride sulfureux liquide, qui est supérieure à 5 moles/litre ; on remarque que, comme dans le cas de l'addition d'un cosolvant tel que l'acétonitrile, l'incorporation d'un tel composé solide n'empêche pas la réalisation de solutions à conductivité ionique élevée lorsqu'on y ajoute des solutés à caractère ionique, tels que les sels alcalins usuels, et cela dans une large gamme de température depuis -40°C à 70°C.

Parmi ceux-ci on a constaté que le chlorure de lithium LiCl, qui présente une grande résistance à l'oxydation par le dioxyde de soufre, pouvait donner lieu à des solutions conductrices dans une très large gamme de compositions ; l'acétonitrile au contraire ne permettait pas l'utilisation de LiCl dans les générateurs électrochimiques du type Li/SO$_2$ en raison d'une solubilité insuffisante, notamment pour les solutions riches en acétonitrile.

Par ailleurs en raison de son exceptionnelle stabilité (la diméthylsulfone ne commence à se décomposer que vers 500°C et résiste aux oxydants et réducteurs les plus énergiques) les électrolytes ainsi réalisés peuvent améliorer considérablement le comportement des générateurs à base de dioxyde de soufre notamment lors d'utilisations en conditions abusives.

Selon une autre variante, le sel alcalin mis en oeuvre est l'hexafluoroarséniate de lithium LiAsF$_6$.

La proportion du sel alcalin est comprise avantageusement entre 0,5 et 2 moles/litre.

D'autres caractéristiques et avantages de la présente invention apparaîtront au cours de la description suivantes donnée à titre illustratif mais nullement limitatif. Dans le dessin annexé :

-La figure 1 montre les variations de la conductivité Γ d'un électrolyte contenant LiCl ou LiAsF$_6$ en fonction de sa concentration C en diméthylsulfone (en moles par litre).

-La figure 2 montre les variations de la conductivité $\Gamma'$ d'un électrolyte contenant de la diméthylsulfone en fonction de la concentration $C'$ en LiCl ou LiAsF$_6$ (en moles par litre).

-La figure 3 montre une courbe de décharge V (volts) en fonction du temps t (heures) d'un premier exemple de générateur électrochimique contenant un électrolyte selon l'invention.

-La figure 4 montre des courbes de charge-décharge V (volts) en fonction du temps t (heures) d'un second exemple de générateur électrochimique contenant un électrolyte selon l'invention.

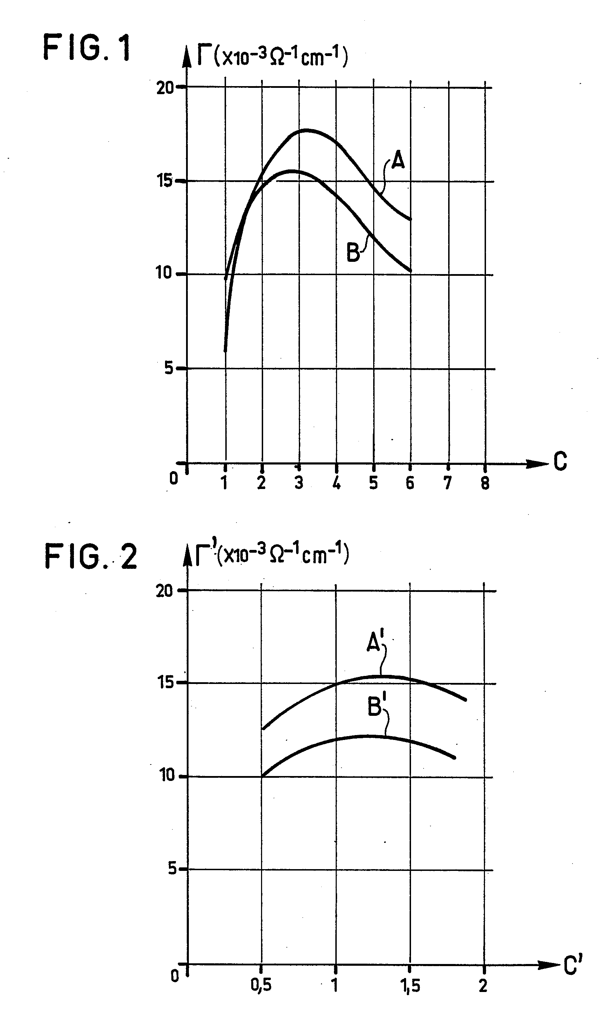

La figure 1 montre les variations de la conductivité spécifique $\Gamma$ ($\Omega^{-1}$ cm$^{-1}$) mesurée à -10°C pour des solutions à teneur variable C en diméthylsulfone et pour une concentration constante en LiCl (courbe A) ou LiAsF$_6$ (courbe B) égale 0,5 mole/litre.

La figure 2 montre les variations de la conductivité spécifique $\Gamma'$ mesurée à -10°C pour des solutions à teneur variable $C'$ en LiCl (courbe A') et LiAsF$_6$ (courbe B') et pour une concentration en diméthylsulfone constante, égale à 6 moles/litre.

## EXEMPLE 1

On a réalisé des éléments D (diamètre extérieur de 3,3 cm, hauteur de 5,9 cm) utilisant une cathode de carbone poreux sur une grille d'aluminium expansé (longueur 53 cm, largeur 4,10 cm), une anode formée par une bande de lithium ayant des dimensions similaires et un séparateur de polypropylène microporeux (séparateur CELGARD) compris entre les composants précédents enroulés en spirale. Ces éléments sont remplis d'une solution de composition suivante :
-SO$_2$ liquide : 30 cm$^3$ environ par élément.
-Diméthylsulfone : concentration 3 moles/litre.
-Chlorure de lithium : concentration 0,5 mole/litre.
Le tension en circuit ouvert de cette pile est de 2,9V.

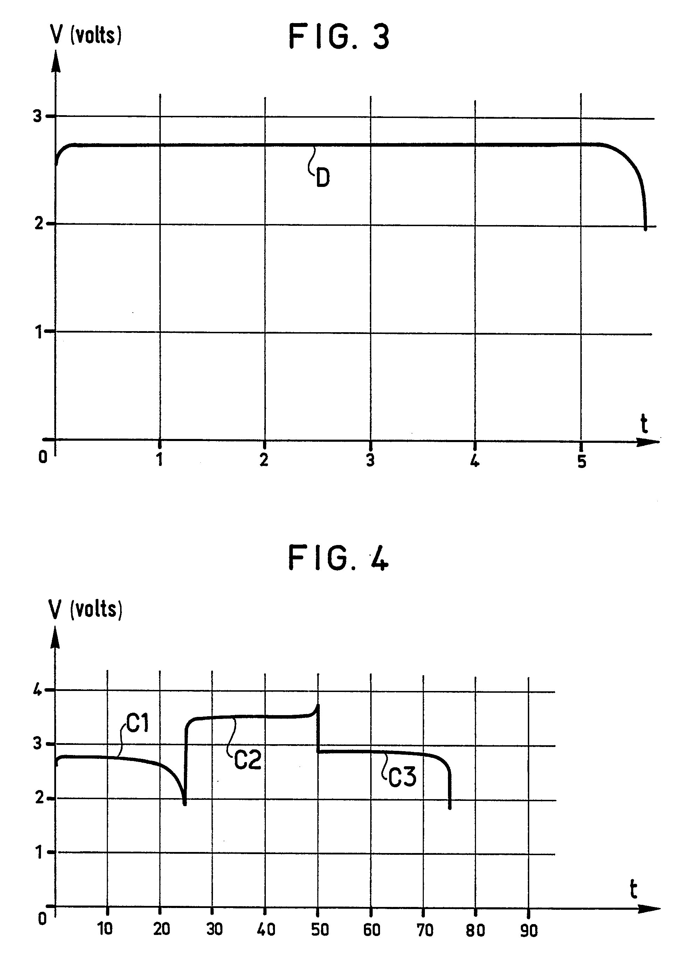

Sur la figure 3 on a représenté la courbe (D) de décharge V (volts) de ces éléments soumis à des courants de 1A à la température de 25°C. La capacité obtenue dans ces conditions est égale à 5,5Ah. On remarque l'excellente stabilité de tension du système ; par ailleurs la tension moyenne mesurée de 2,75 V, valeur très proche de la f.e.m (2,9V), montre la très faible polarisation des électrodes dans ces conditions.

## EXEMPLE 2

Des éléments D du type précédent sont remplis cette fois avec une solution où le chlorure de lithium est remplacé par de l'hexafluoroarséniate de lithium avec une concentration de 0,5 mole par litre.

Sur la figure 4 on a représenté la courbe C$_1$ de décharge de ces éléments soumis, à la température de 25°C, à un courant de décharge de 0,2A jusqu'à une tension d'arrêt de 2V, puis soumis à une recharge (courbe C$_2$) sous le même courant pendant une durée équivalente à la charge. Une décharge de contrôle (courbe C$_3$) a été ensuite entreprise pour vérifier l'efficacité de la charge effectuée. Cette efficacité est de l'ordre de 100%.

On remarquera l'excellente stabilité de tension enregistrée aussi bien en décharge qu'en charge, la tension de charge étant par ailleurs toujours inférieure à la tension de décomposition de l'électrolyte présumée supérieure à 4 V avec l'utilisation de LiAsF$_6$ comme soluté. De tels générateurs sont susceptibles de fonctionner entre -40 et 70°C.

Les exemples précédents définissent simplement l'invention et bien entendu, des modifications dans les matières et les structures des générateurs peuvent être envisagées sans pour autant sortir du cadre de l'invention.

## Revendications

1/ Electrolyte non aqueux à base de dioxyde de soufre pour générateurs électrochimiques, caractérisé par le fait qu'il contient de la diméthylsulfone dans une proportion de 1 à 6 moles par litre, additionnée d'au moins un sel alcalin.

2/ Electrolyte non aqueux selon la revendication 1, caractérisé par le fait que ledit sel alcalin est choisi parmi le chlorure de lithium et l'hexafluoroarséniate de lithium.

3/ Electrolyte non aqueux selon la revendication 2, caractérisé par le fait que la concentration dudit sel alcalin est comprise entre 0,5 et 2 moles par litre.

4/ Générateur électrochimique comportant une électrode négative au lithium, une cathode, et un électrolyte non aqueux à base de dioxyde de soufre, caractérisé par le fait que ledit électrolyte répond à la composition de la revendication 1.

5/ Générateur électrochimique selon la revendication 4, caractérisé par le fait que ladite cathode est formée de carbone poreux.

FIG. 1

FIG. 2

## FIG. 3

V (volts)

## FIG. 4

V (volts)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 520 084 (L.A. TINKER) <br> * Colonne 2, lignes 36-66; colonne 5, lignes 6-15; colonne 6, lignes 7-37; colonne 7, lignes 45-65 * | 1,4,5 | H 01 M 6/14 <br> H 01 M 10/36 |
| A | US-A-3 567 515 (D.L. MARICLE et al.) <br> * Colonne 4, lignes 52-75; colonne 5, ligne 1 - colonne 7, ligne 36 * | 1-5 | |
| A | CHEMICAL ABSTRACTS, vol.104, no. 18, mai 1986, page 205, résumé no. 152384g, Columbus, Ohio, US; J.P. PEREIRA-RAMOS et al.: "Sulfone based electrolytes for lithium intercalation batteries", & J. POWER SOURCES 1985, 16(3), 193-204 <br> * En entier * | 1,2 | |
| A | CHEMICAL ABSTRACTS, vol. 102, no. 24, juin 1985, page 505, résumé no. 211474v, Columbus, Ohio, US; A.S. VOROB'EV et al.: "Electrochemical reduction of sulfur dioxide in sulfolane", & ELEKTROKHIMIYA 1985, 21(3), 344-8 <br> * En entier * | 1 | |

**DOMAINES TECHNIQUES RECHERCHES (Int. Cl.4)**

H 01 M 6/14
H 01 M 10/36

--- -/-

Le présent rapport de recherche a été établi pour toutes les revendications

| Lieu de la recherche | Date d'achèvement de la recherche | Examinateur |
|---|---|---|
| LA HAYE | 22-10-1987 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl 4) |
|---|---|---|---|
| A | PATENT ABSTRACTS OF JAPAN, vol. 8, no. 200 (E-266)[1637], 13 septembre 1984; & JP-A-59 87 769 (NIHON DENCHI K.K.) 21-05-1984 * En entier * | 1 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 22-10-1987 | DE VOS L.A.R. |